# EUROPÄISCHE PATENTSCHRIFT

(11) **EP 3 938 838 B1**
(45) Veröffentlichungstag und Bekanntmachung des Hinweises auf die Patenterteilung: **24.04.2024**
(21) Anmeldenummer: 20711550.2
(22) Anmeldetag: 11.03.2020
(51) Int. Cl.: G02C 13/00

(54) **VERFAHREN, ZENTRIERVORRICHTUNG UND COMPUTERPROGRAMMPRODUKT ZUR ABSTANDSMESSUNG EINES BENUTZERS VON EINER ZENTRIERVORRICHTUNG**
METHOD, CENTERING DEVICE AND COMPUTER PROGRAM PRODUCT FOR MEASURING THE DISTANCE OF A USER FROM A CENTERING DEVICE
PROCÉDÉ, DISPOSITIF DE CENTRAGE ET PRODUIT PROGRAMME D'ORDINATEUR PERMETTANT DE MESURER LA DISTANCE ENTRE UN UTILISATEUR ET UN DISPOSITIF DE CENTRAGE

(30) Priorität: 12.03.2019 DE 102019001762
(43) Veröffentlichungstag der Anmeldung: 19.01.2022
(73) Patentinhaber: Rodenstock GmbH, 80687 München (DE)
(72) Erfinder: GROMANN, Lukas, 85354 Freising (DE); TIEMANN, Markus, 81539 Muenchen (DE)
(74) Vertreter: Müller-Boré & Partner Patentanwälte PartG mbB
(86) Internationale Anmeldenummer: PCT/EP2020/056473
(87) Internationale Veröffentlichungsnummer: WO 2020/182867

(56) Entgegenhaltungen:
- WO-A1-2017/174525
- DE-A1- 4 323 384
- US-A- 6 076 928

## Beschreibung

Die vorliegende Erfindung betrifft ein Verfahren zur Abstandsmessung eines Benutzers von einer Zentriervorrichtung, eine Zentriervorrichtung zur Abstandsmessung eines Benutzers von der Zentriervorrichtung sowie ein Computerprogrammprodukt zum Durchführen des Verfahrens.

Seit der Einführung von individuell optimierten Brillengläsern ist es möglich, auf die Ansprüche von Personen mit Sehfehlern einzugehen und beispielsweise Brillengläser mit individuell optimierten Sehbereichen bereitzustellen. Individuell angepasste Brillengläser ermöglichen eine optimale Korrektur von optischen Sehfehlern eines Benutzers der Brillengläser.

Die Brillengläser optischer Brillen werden regelmäßig auf bestimmte Sollvorgaben hin berandet, die vom Benutzer der Brille abhängen können. So sollen die optischen Brillengläser der Brille regelmäßig so in der Brillenfassung angeordnet werden, dass Durchblickspunkte der Augen des Benutzers in Gebrauchsstellung an vorbestimmten Positionen auf den jeweiligen Brillengläsern angeordnet sind. Man spricht in diesem Zusammenhang davon, dass die Brillengläser in der Fassung der Brille richtig zentriert werden.

Eine Überprüfung dieser Zentrierung der Brillengläser, also eine Überprüfung einer Fertigungsqualität und/oder einer Einschleifqualität, kann entweder an der fertigen Brille oder an den formgerandeten Brillengläsern erfolgen. Für die Zentrierung können optische Parameter des Benutzers ermittelt werden, wie z.B. eine Pupillendistanz, Durchblickspunkte, ein Fassungsscheibenwinkel, usw.

Optische Parameter und Begriffe wie z.B. "Pupillendistanz", "Einschleifhöhe", "Zentrierpunkt", "Gebrauchsstellung", "Funktionsgravuren" "Durchblickspunkt" usw. sind in einschlägigen Normen, wie beispielsweise der DIN EN ISO 1366, der DIN 58 208, der DIN EN ISO 8624 und der DIN 5340 definiert und können diesen entnommen werden.

Herkömmlich wird eine Überprüfung der Zentrierung mit händischen Messverfahren durchgeführt, z.B. durch Anzeichnen der Funktionsgravuren und Abmessung von Abständen mit einem Pupillendistanzlineal beim Optiker. Händische Überprüfungen sind immer fehleranfällig, da sie von menschlichen Personen durchgeführt werden.

Weiterhin sind teilautomatisierte Verfahren zur Überprüfung der Zentrierung, der Einschleifhöhe und/oder der Pupillendistanz bekannt, bei denen zunächst einzelne Punkte (wie z.B. ein Zentrierpunkt) auf den Brillengläsern vormarkiert werden.

Aus dem Dokument WO 2006/079540 A1 ist eine Zentriervorrichtung bekannt, mittels der optische Parameter eines Benutzers bestimmt werden können und somit eine Zentrierung durchgeführt werden kann. Bei der vorbekannten Zentriervorrichtung wird der Benutzer z.B. von einem Optiker so vor der Zentriervorrichtung positioniert, dass er in einem Sollabstand davor angeordnet ist, in welchem die Zentriervorrichtung Bildaufnahmen von dem Benutzer erzeugt. Dabei weist die Zentriervorrichtung Bildaufnahmeeinrichtungen auf, welche Bilder von dem Gesicht des Benutzers erzeugen. Aus diesen Bildern werden die zur Zentrierung erforderlichen optischen Parameter berechnet.

Die Druckschrift WO 2017/174525 A1 betrifft ein Verfahren und Vorrichtungen zum Bestimmen von (Zentrier-)Parametern zur Brillenanpassung. Dabei erfasst eine Tiefeninformationserfassungseinrichtung eine Tiefeninformation hinsichtlich eines Kopfes eines Benutzers, wobei die Tiefeninformation einen Abstand zwischen dem Kopf und der Vorrichtung beinhalten. Auf Basis der Tiefeninformation und gegebenenfalls weiterer Informationen wie Bildern kann dann eine Auswerteeinrichtung die gewünschten Parameter zur Brillenanpassung wie die Zentrierparameter bestimmen. Es wird eine Mehrzahl unterschiedlicher Ausführungsformen der Tiefeninformationserfassungseinrichtung offenbart.

Der Erfindung liegt die Aufgabe zugrunde, die Bedienung einer Zentriervorrichtung zu vereinfachen und/oder zu verbessern, insbesondere eine Positionierung des Benutzers vor einer Zentriervorrichtung zu vereinfachen und/oder zu verbessern.

Diese Aufgabe wird von den Gegenständen der unabhängigen Ansprüche gelöst. Ausführungsformen der Erfindung sind die Gegenstände der Unteransprüche.

Ein Aspekt betrifft ein Verfahren zur Abstandsmessung eines Benutzers von einer Zentriervorrichtung, welche zum Bestimmen von optischen Parametern des Benutzers ausgelegt ist. Dabei wird der Abstand zu der Zentriervorrichtung ermittelt, welche zwei Bildaufnahmeeinrichtungen mit einer vorbekannten Kalibrierung zueinander aufweist. Der Benutzer wird derart vor der Zentriervorrichtung positioniert, dass die zwei Bildaufnahmeeinrichtungen zumindest teilweise auf das Gesicht des der Zentriervorrichtung zugewandten Benutzers gerichtet sind. Mittels der zwei Bildaufnahmeeinrichtungen werden zwei Bilddatensätze von jeweils zumindest Teilbereichen des Gesichts des Benutzers aus zwei unterschiedlichen Raumrichtungen erzeugt. In jedem der beiden Bilddatensätze wird mittels Bildverarbeitungsalgorithmen jeweils eine Mehrzahl von vorbestimmten charakteristischen Gesichtspunkten des Benutzers ermittelt. Durch einen Vergleich der Position sich entsprechender charakteristischer Gesichtspunkte in den beiden Bilddatensätzen wird unter Berücksichtigung der Kalibrierung der beiden Bildaufnahmeeinrichtungen zueinander der Abstand des Benutzers von der Zentriervorrichtung ermittelt.

Das Verfahren dient zur Abstandsmessung des Benutzers von der Zentriervorrichtung. Das Verfahren kann zum Ziel haben, den Benutzer so vor der Zentriervorrichtung zu positionieren, dass diese optische Parameter des Benutzers bestimmen kann, um eine Zentrierung durchzuführen. Dabei ist es vorteilhaft, wenn der Benutzer in einem Sollabstandsbereich angeordnet ist, um die Zentrierung mit besonders guten Ergebnissen durchzuführen.

Der Sollabstandsbereich kann zum Beispiel davon abhängen, auf welchen Tiefenschärfenbereich die Bildaufnahmeeinrichtungen der Zentriervorrichtung eingestellt sind. Da zumindest die Bestimmung der optischen Parameter des Benutzers bevorzugt auf Basis von pixelgenauen Bilddaten ermittelt werden, ist es vorteilhaft, wenn der Benutzer so im Sollabstandsbereich angeordnet ist, dass mit den Bildaufnahmeeinrichtungen qualitativ hochwertige, d.h. scharfe, Bilddaten von zumindest Teilen des Gesichts des Benutzers aufgenommen werden können.

Bei der Zentriervorrichtung kann es sich um eine Zentriervorrichtung handeln, welche in dem eingangs genannten Dokument WO 2006/079540 A1 offenbart ist. Die Zentriervorrichtung weist zumindest zwei Bildaufnahmeeinrichtungen auf, die eine feste, vorbestimmte Kalibrierung zueinander aufweisen. Zur Bestimmung der optischen Parameter werden Zentrierbilddaten vom Benutzer erzeugt, genauer zumindest von Teilbereichen des Gesichts des Benutzers, und zwar mittels der zumindest zwei Bildaufnahmeeinrichtungen. Aus den von den beiden Bildaufnahmeeinrichtungen erzeugten Bilddaten können dann unter Kenntnis der vorbekannten Kalibrierung und ggf. des Abstandes des Benutzers von der Zentriervorrichtung 3D-Koordinaten von einzelnen Punkten im Gesicht des Benutzers und/oder einer Brille oder Brillenfassung ermittelt werden, welche der Benutzer in Gebrauchsstellung trägt. Aus diesen 3D-Koordinaten lassen sich die für eine Zentrierung wichtigen optischen Parameter wie zum Beispiel Pupillenabstand, Fassungsscheibenwinkel, usw. berechnen.

Entscheidend für die Ermittlung der optischen Parameter ist es, dass der Benutzer korrekt vor der Zentriervorrichtung positioniert ist. Die Positionierung des Benutzers vor der Zentriervorrichtung kann eine Überprüfung des Abstandes des Benutzers von der Zentriervorrichtung enthalten. Der Abstand des Benutzers zur Zentriervorrichtung kann gemäß dem erfindungsgemäßen Verfahren ohne zusätzliche Hardware-Komponenten (wie z.B. einem Infrarotabstandssensor) ermittelt werden, also ausschließlich unter Verwendung von Hardware-Komponenten, welche die Zentriervorrichtung ohnehin aufweist. So werden z.B. zumindest zwei der Bildaufnahmeeinrichtungen, bevorzugt genau zwei der Bildaufnahmeeinrichtungen der Zentriervorrichtung verwendet, sowie eine gegebenenfalls ebenfalls bereits in der Zentriervorrichtung vorhandene Datenverarbeitungseinrichtung. Auf zusätzliche Hardware-Bauteile kann dabei verzichtet werden, was den Bauteilaufwand und/oder die Kosten der Zentriervorrichtung reduzieren kann.

Gemäß dem Verfahren wird der Benutzer so vor der Zentriervorrichtung positioniert, dass die zumindest zwei Bildaufnahmeeinrichtungen zumindest teilweise auf das Gesicht des der Zentriervorrichtung zugewandten Benutzers gerichtet sind. Mit anderen Worten wird der Benutzer so vor der Zentriervorrichtung positioniert, dass die Bildaufnahmeeinrichtungen Bilder des Gesichts des Benutzers zumindest teilweise aufnehmen können. Bei dieser ersten, ungefähren Positionierung des Benutzers ist es noch nicht erforderlich, dass der Benutzer genau in einem Sollabstandsbereich angeordnet ist. Der Benutzer kann vielmehr beliebig vor der Zentriervorrichtung positioniert werden, solange er dieser mehr oder weniger zugewandt ist. Bevorzugt kann der Benutzer jedoch bereits auch schon hierbei zumindest ungefähr in einem (z.B. vom Optiker) geschätzten Sollabstandsbereich vor der Zentriervorrichtung positioniert werden.

Anschließend werden mittels der zumindest zwei Bildaufnahmeeinrichtungen zumindest zwei Bilddatensätze von jeweils zumindest Teilbereichen des Gesichts des Benutzers aus zwei unterschiedlichen Raumrichtungen erzeugt. Die Bilddatensätze können dabei jeweils entweder zumindest Teilbereiche des Gesichts des Benutzers enthalten, oder auch zusätzlich eine Brille und/oder Brillenfassung, welche der Benutzer in Gebrauchsstellung trägt. Die Bilddatensätze werden deswegen aus zwei unterschiedlichen Raumrichtungen erzeugt, weil sie von den zwei unterschiedlich positionierten Bildaufnahmeeinrichtungen erzeugt werden. Hierbei werden die zwei Bilddatensätze von den Bildaufnahmeeinrichtungen im Wesentlichen gleichzeitig so erzeugt, so dass sie zwei Bilder und/oder Aufnahmen und/oder Informationen von zumindest Teilbereichen des Gesichts des Benutzers in etwa zum selben Zeitpunkt enthalten.

Anschließend wird in jedem der beiden Bilddatensätze mittels Bildverarbeitungsalgorithmen jeweils eine Mehrzahl von vorbestimmten, insbesondere einzelnen, charakteristischen Gesichtspunkten des Benutzers ermittelt. Die einzelnen, vorbestimmten charakteristischen Gesichtspunkte des Benutzers können dabei nasale und/oder temporale Punkte an den Augenbrauen, den Augenwinkeln, Pupillenmittelpunkte, Wangenknochenpunkte, Ohrenansatzpunkte, Kinnansatzpunkte, und/oder ähnliche Gesichtspunkte des Benutzers umfassen. Die Bildverarbeitungsalgorithmen können dabei Bilderkennungsalgorithmen enthalten, die in den Bilddatensätzen automatisch und/oder halbautomatisch die vorbestimmten charakteristischen Gesichtspunkte erkennen.

Die Bildverarbeitungsalgorithmen können entsprechend trainiert worden sein, um die vorbestimmten Gesichtspunkte möglichst zielsicher zu erkennen. Es handelt sich bei den Bildverarbeitungsalgorithmen somit bevorzugt um trainierte Bildverarbeitungsalgorithmen, die z.B. mittels "Machine-Learning" auf die Erkennung der vorbestimmten charakteristischen Gesichtspunkte hin trainiert worden sind, bevorzugt auf Basis von zumindest 20, besonders bevorzugt auf Basis von zumindest 100, Bilddatensätzen unterschiedlicher Gesichter.

Hierbei ist es beachtlich, dass sich die erfindungsgemäße Detektion einzelner, vorbestimmter charakteristischer Gesichtspunkte in den Bilddatensätzen unterscheidet von einem sogenannten Blockmatching der unterschiedlichen Bilddatensätze. Bei vorbekannten Stereokamerasystemen ist es bekannt, zur Ermittlung einander entsprechender Bereiche im aufgenommenen Bild sogenannte Blockmatching-Verfahren zu verwenden. Hierbei wird in den von in beiden unterschiedlichen Stereokameras aufgenommenen Bildern jeweils ein Pixelbereich ausgewählt und mit einem Pixelbereich im anderen Bilddatensatz verglichen. So können bei herkömmlichen Stereokamerasystemen in den beiden unterschiedlichen Bilddatensätzen zum Beispiel Pixelbereiche von jeweils etwa 10 x 10 Pixeln gefunden werden, die sich möglichst ähnlich sind und sich daher womöglich entsprechen. So kann bei herkömmlichen Stereokamerasystemen eine Abstandsbestimmung und/oder eine Räumlichkeit ermittelt werden. Blockmatching-Verfahren eignen sich jedoch nur für Stereokamerasysteme, bei denen die Aufnahmekameras nur aus sich unwesentlich unterscheidenden Aufnahmerichtungen Bilddatensätze erzeugen. So werden nur dann Bilder mit sich hinreichend entsprechenden Pixelblöcken erzeugt. Deswegen beschränken Blockmatching-Verfahren die Positioniermöglichkeit der Stereokameras beträchtlich.

Unter Verwendung der Bildverarbeitungsalgorithmen zur Ermittlung der charakteristischen, einzelnen Gesichtspunkte des Benutzers ist es möglich, die Bildaufnahmeeinrichtungen mit einem größeren vertikalen und/oder horizontalen Abstand zueinander an der Zentriervorrichtung anzuordnen, als es Blockmatching-Verfahren zulassen würden. Die verwendeten Bildverarbeitungsalgorithmen verbessern somit die Positioniermöglichkeit der Bildaufnahmeeinrichtungen. So kann handelsübliche Gesichtserkennungssoftware einzelne Gesichtspunkte sogar dann erkennen, wenn ein Gesicht lediglich im Profil aufgenommen ist.

Nachdem die vorbestimmten charakteristischen Gesichtspunkte in den beiden (vorzugsweise digitalen) Bilddatensätzen ermittelt worden sind, werden die Positionen sich entsprechender charakteristischer Gesichtspunkte in den beiden Bilddatensätzen miteinander verglichen. Hierbei können insbesondere die Pixelpositionen der entsprechenden charakteristischen Gesichtspunkte miteinander verglichen werden. Hierbei bedeutet der Ausdruck "sich entsprechende charakteristische Gesichtspunkte", dass es sich um denselben Gesichtspunkt in den beiden Bilddatensätzen handelt, wie zum Beispiel den linken Pupillenmittelpunkt, die Kinnspitze, die Nasenspitze, usw. So kann z.B. die Pixelposition des linken Pupillenmittelpunkts im ersten Bilddatensatz mit der Pixelposition des linken Pupillenpunkts im zweiten Bilddatensatz miteinander verglichen werden. Unter Berücksichtigung der Kalibrierung der beiden Bildaufnahmeeinrichtungen zueinander kann aus den Positionen der sich entsprechenden charakteristischen Gesichtspunkte zum Beispiel mittels Triangulation der Abstand des Benutzers von der Zentriervorrichtung ermittelt werden. Solche Triangulationsverfahren sind vorbekannt und ermöglichen zum Beispiel die Bestimmung von 3D-Koordinaten der sich entsprechenden charakteristischen Gesichtspunkte, aus welchen wiederum der Abstand zur Zentriervorrichtung berechnet und/oder ermittelt werden kann.

Der so ermittelte Abstand des Benutzers kann entweder dazu verwendet werden, in die Berechnung der optischen Parameter in einem nachfolgenden Messschritt einzufließen und/oder die Position des Benutzers vor der Zentriervorrichtung zu korrigieren. So kann sich aus dem ermittelten Abstand zum Beispiel ergeben, dass der Abstand des Benutzers zur Zentriervorrichtung reduziert und/oder vergrößert werden muss, bevor die eigentliche Messung der optischen Parameter des Benutzers erfolgt. Die Abstandsmessung kann solange wiederholt werden, bis sich der Benutzer in einem Sollabstandsbereich befindet, in welchem die Bestimmung der optischen Parameter durch die Zentriervorrichtung erfolgen kann.

Alternativ oder zusätzlich kann der so ermittelte Abstand auch unmittelbar in die Berechnung der optischen Parameter eingehen, und zwar als Teil der grundlegenden Daten, auf denen die Benutzerdaten im dreidimensionalen Raum von der Zentriervorrichtung erstellt werden.

Somit ermöglicht das erfindungsgemäße Verfahren eine Abstandsbestimmung ohne dass die Hardware der Zentriervorrichtung weiter ergänzt werden muss. Der Abstand kann allein auf Basis ohnehin in der Zentriervorrichtung vorhandener Hardware-Komponenten ermittelt werden. Dies kann die Einsatzmöglichkeiten der Zentriervorrichtung verbessern sowie die generelle Handhabung der Zentriervorrichtung. Weiterhin kann durch eine genauere Abstandsbestimmung das Ergebnis der Bestimmung der optischen Parameter des Benutzers verbessert werden.

Gemäß beanspruchter Erfindung werden die charakteristischen Gesichtspunkte in den beiden Bilddatensätzen mittels einer Gesichtserkennungssoftware ermittelt.

Eine Gesichtserkennungssoftware ist dazu ausgelegt, in Bilddatensätzen Gesichter von Personen zu erkennen. Dabei benutzen Gesichtserkennungssoftwareprogramme sogenannte Featurepunkte, die sie in den Gesichtern versuchen zu ermitteln und zu erkennen, und/oder anhand denen sie Gesichter in Bilddatensätzen erkennen. Im Verfahren werden die vorbestimmten charakteristischen Gesichtspunkte als Featurepunkte einer Gesichtserkennungssoftware verwendet. Dabei können standardmäßig genau die Gesichtspunkte verwendet werden, mit denen die entsprechende Gesichtserkennungssoftware standardmäßig arbeitet. Alternativ können zusätzliche und/oder andere Gesichtspunkte dazu verwendet werden. Diese Gesichtspunkte können insbesondere augennahe Gesichtspunkte enthalten, auf deren Basis der Abstand der Augenpartie des Benutzers zu der Zentriervorrichtung besonders gut bestimmt werden kann. Beispielhaft können dazu Bildverarbeitungsalgorithmen der im Internet verfügbaren Dlib-Bibliotheken verwendet werden. Dlib sind in der Programmiersprachen C++ geschriebene, freie Software-Bibliotheken mit Algorithmen für maschinelles Lernen, Bildverarbeitung und maschinelles Sehen. So kann standardisierte, freie und/oder kommerziell verfügbare Gesichtserkennungssoftware dazu verwendet werden, den Abstand des Benutzers von der Zentriervorrichtung zu ermitteln.

Gemäß einer Ausführungsform werden in den beiden Bilddatensätzen jeweils von etwa 20 bis etwa 100 verschiedene charakteristische Gesichtspunkte ermittelt. Diese Anzahl ist notwendig und/oder ausreichend, um das Gesicht in den Bilddatensätzen mit einer hinreichenden Genauigkeit zu erkennen. Bevorzugt werden von etwa 40 bis etwa 80 verschiedene charakteristische Gesichtspunkte in jedem Bilddatensatz ermittelt. Beispielsweise gibt es standardisierte Gesichtserkennungssoftwareprogramme, die in Bilddatensätzen Gesichter auf Basis von 68 verschiedenen Gesichtspunkten als Featurepunkte erkennen.

Gemäß einer Ausführungsform wird in Abhängigkeit des ermittelten Abstands zumindest solange eine Rückmeldung erzeugt, bis der Benutzer in einem Sollabstandsbereich vor der Zentriervorrichtung positioniert ist. Dabei kann der Benutzer mittels eines Feedback-Signals in den Sollabstandsbereich geleitet werden. Das Feedback kann von der Zentriervorrichtung ausgegeben werden, beispielsweise mittels einer farbigen Signallampe, einer Anzeige des aktuellen Ist-Abstands und/oder eines akustischen Signals und/oder einer Sprachausgabe, welche den Benutzer in den Sollabstandsbereich leitet.

Der Sollabstandsbereich kann insbesondere ein Bereich vor der Zentriervorrichtung sein, in welchem die Bildaufnahmeeinrichtungen ein Maximum ihrer Tiefenschärfe erzielen. Beispielsweise kann der Sollabstandsbereich als ein Bereich mit einem Abstand von etwa 50 cm bis etwa 100 cm, bevorzugt von etwa 60 cm bis etwa 75 cm, vor der Zentriereinrichtung ausgebildet sein. Abhängig von der Qualität der Bildaufnahmeeinrichtungen kann der Sollabstandsbereich auch anders dimensioniert sein, insbesondere größer sein, wenn hochwertigere Bildaufnahmeeinrichtungen (z.B. mit einem größeren Tiefenschärfebereich) verwendet werden. Hierbei kann die Ermittlung des Abstands iterativ erfolgen, um ein Leiten des Benutzers in den Sollabstandsbereich zu ermöglichen. Weiterhin kann der Abstand auch nach Erreichen des Sollabstandsbereichs weiter ermittelt werden, um zum Beispiel ein positives Feedback zu geben, also beispielsweise um anzuzeigen, dass sich der Benutzer im Sollabstandsbereich befindet. Der zuletzt ermittelte Abstand des Benutzers von der Zentriervorrichtung kann in die Ermittlung der optischen Parameter des Benutzers während einer nachfolgenden Hauptmessung einfließen.

Gemäß einer Ausführungsform enthalten die charakteristischen Gesichtspunkte sowohl einen rechten als auch einen linken pupillennahen Gesichtspunkt. Unter Berücksichtigung der Entfernung der ermittelten rechten und linken pupillennahen Gesichtspunkte wird ein mittlerer Pupillenabstand des Benutzers von der Zentriervorrichtung als der Abstand des Benutzers von der Zentriervorrichtung ermittelt. Dadurch ist sichergestellt, dass die zur Ermittlung der optischen Parameter relevanten Kennpunkte des Gesichts und/oder der an dem Gesicht angeordneten Brille allesamt etwa im Sollabstandsbereich angeordnet sind. So können die zur Ermittlung der optischen Parameter relevanten Punkte allesamt in Pupillennähe angeordnet sein. Als rechter und/oder linker pupillennaher Gesichtspunkt kann insbesondere der jeweilige Pupillenmittelpunkt verwendet werden. Alternativ kann hierzu auch ein anderer charakteristischer Gesichtspunkt des jeweiligen Auges bzw. einer augennahen Gesichtspartie verwendet werden, wie z.B. an den Brauen und/oder der Nase des Benutzers.

Gemäß einer Ausführungsform werden mit den Bildaufnahmeeinrichtungen digitale Videos als die beiden Bilddatensätze aufgenommen. Zur Erkennung charakteristischer Gesichtspunkte in Videos kann ebenfalls Gesichtserkennungssoftware verwendet werden. Üblicherweise kann Gesichtserkennungssoftware einzelne charakteristische Gesichtspunkte sowohl in Standbildern als auch in bewegten Bildern, d.h. in Videos, identifizieren und erkennen.

In einer Weiterbildung dieser Ausführungsform werden die beiden Bilddatensätze als ein Live-Feed erzeugt, in dem die charakteristischen Gesichtspunkte des Benutzers (z.B. iterativ) in Echtzeit ermittelt werden. Der Live-Feed kann hierbei zum Beispiel auf einen Bildschirm übertragen werden, auf welchem eine Bedienperson wie zum Beispiel ein Optiker überprüfen kann, ob die Bildverarbeitungsalgorithmen das Gesicht richtig erkennen. Der Live-Feed kann besonders gut dazu benutzt werden, den Benutzer in einen Sollabstandsbereich zu leiten.

Gemäß einer Ausführungsform erzeugt die Zentriervorrichtung nach der Abstandsmessung mit den beiden Bildaufnahmeeinrichtungen Zentrierbilddaten von jeweils zumindest einem Teilbereich des Gesichts des Benutzers und ermittelt anhand dieser Zentrierbilddaten (z.B. für die Zentrierung relevante) optische Parameter des Benutzers.

Dabei können 3D-Koordinaten von vorbestimmten Punkten im und/oder um das Gesicht des Benutzers erzeugt werden, aus welchen die optischen Parameter berechnet werden können. Die 3D-Koordinaten können in einem beliebigen 3D-Koordinatensystem ermittelt werden, z.B. im Bezugssystem der Erde, im Bezugssystem des Benutzers, im Bezugssystem der Zentriervorrichtung, und/oder im Bezugssystem der Bildaufnahmevorrichtungen. Die 3D-Koordinaten können nachfolgend weiter verarbeitet werden.

Dabei können die Zentrierbilddaten insbesondere Informationen über den Kopf und/oder das Gesicht des Benutzers mit einer daran angebrachten Brillenfassung enthalten. Es können 3D-Koordinaten vorbestimmter Punkte aus dem System umfassend den Kopf des Benutzers mit Brillenfassung erfasst werden, die zur Berechnung von optischen Parametern verwendet werden können, z.B. Pupillenmittelpunkte.

In einer Weiterbildung dieser Ausführungsform werden die Bilddatensätze zur Bestimmung des Abstands des Benutzers in einer geringeren Auflösung erzeugt als die Zentrierbilddaten zur Bestimmung der optischen Parameter. Beispielsweise können die Bilddatensätze zur Abstandsbestimmung mit der Hälfte oder einem Viertel der vollen und/oder maximalen Kameraauflösung erzeugt werden, während die Zentrierbilddaten mit der vollen, maximalen Kameraauflösung erzeugt werden. Die Nutzung einer geringeren Datenmenge und somit eines reduzierten Datenvolumens bei der Abstandsmessung kann zum Beispiel dazu benutzt werden, eine Live-Datenverbindung über ein lokales WLAN zu ermöglichen. Technisch kann es für die Abstandsbestimmung ausreichend sein, die Bilddatensätze zur Abstandsmessung in einer geringeren Auflösung zu erzeugen, da die Abstandsmessung nicht mit einer hohen Pixelgenauigkeit erfolgen muss. So ist es zur Abstandsmessung lediglich notwendig, den Benutzer in einem Sollabstandsbereich anzuordnen, welcher einen Distanzbereich von mehreren Zentimetern und somit eine Abstandsvarianz umfassen kann. Die eigentliche Hauptmessung, also die Messung der optischen Parameter, erfolgt jedoch bevorzugt pixelgenau mit einer möglichst hohen Auflösung, um eine möglichst exakte Zentrierung zu ermöglichen.

Gemäß einer Ausführungsform umfasst die Kalibrierung sowohl eine interne als auch eine externe Kalibrierung. Die interne Kalibrierung kann Daten und/oder Kennzahlen umfassen, die beschreiben und/oder definieren, wie ein Lichtstrahl aus der oder den Bildaufnahmevorrichtung(en) austritt. So kann die interne Kalibrierung zum Beispiel eine Fokuslänge, eine Bildgröße, eine Objektivverzerrung, ein Bildzentrum (also ein Ziel des Zentralstrahls aus der Bildaufnahmeeinrichtung), eine Pixelgröße und/oder eine Relation der Pixelgröße zu einer Maßeinheit im realen Raum umfassen. Die externe Kalibrierung kann Daten und/oder Kennzahlen umfassen, die beschreiben und/oder definieren, wie die beiden Bildaufnahmeeinrichtungen relativ zueinander angeordnet sind. Die externe Kalibrierung kann insbesondere einen Abstand der beiden Kameras voneinander, also eine Ortsinformation im dreidimensionalen Raum, enthalten sowie eine Ausrichtung der optischen Achsen der Bildaufnahmeeinrichtungen, z.B. einen Zwischenwinkel.

Ein Aspekt betrifft eine Zentriervorrichtung zum Bestimmen von optischen Parametern eines Benutzers und zur Abstandsmessung des Benutzers von der Zentriervorrichtung mit zwei Bildaufnahmeeinrichtungen mit einer vorbekannten Kalibrierung zueinander, welche ausgelegt und angeordnet sind, jeweils Bilddatensätze von zumindest Teilbereichen des Gesichts des Benutzers aus zwei unterschiedlichen Raumrichtungen zu erzeugen. Eine Datenverarbeitungseinrichtung weist eine Punkterkennungseinrichtung auf, welche ausgelegt ist, in jedem der erzeugten Bilddatensätze mittels Bildverarbeitungsalgorithmen jeweils eine Mehrzahl von vorbestimmten charakteristischen Gesichtspunkten des Benutzers zu ermitteln. Die Datenverarbeitungseinrichtung weist weiterhin eine Abstandsermittlungseinrichtung auf, welche ausgelegt ist, durch einen Vergleich der Position sich entsprechender charakteristischer Gesichtspunkte in den beiden Bilddatensätzen unter Berücksichtigung der Kalibrierung der beiden Bildaufnahmeeinrichtungen zueinander einen Abstand des Benutzers von der Zentriervorrichtung zu ermitteln.

An der Zentriervorrichtung kann insbesondere das Verfahren gemäß dem voranstehend beschriebenen Aspekt durchgeführt werden. Deswegen treffen sämtliche Ausführungen zu dem Verfahren auch auf die Zentriervorrichtung zu und umgekehrt.

Gemäß einer Ausführungsform ist die Punkterkennungseinrichtung dazu ausgelegt, die charakteristischen Gesichtspunkte in den beiden Bilddatensätzen mittels einer Gesichtserkennungssoftware zu ermitteln.

In einer Ausführungsform weist die Zentriervorrichtung eine Abstandsausgabeeinrichtung auf, welche ausgelegt ist, in Abhängigkeit des von der Abstandsermittlungseinrichtung ermittelten Abstands zumindest solange eine Rückmeldung zu erzeugen, bis der Benutzer in einem Sollabstandsbereich vor der Zentriervorrichtung positioniert ist. Die Abstandsausgabeeinrichtung kann zum Beispiel einen Bildschirm aufweisen, der ein Feedback zum aktuellen Istabstand des Benutzers von der Zentriervorrichtung ausgibt. Alternativ oder zusätzlich kann die Abstandsausgabeeinrichtung einen Lautsprecher und/oder Anzeigelichter wie zum Beispiel LEDs aufweisen.

Gemäß einer Ausführungsform sind die zwei Bildaufnahmeeinrichtungen zudem ausgelegt und angeordnet, jeweils Zentrierbilddaten zumindest von Teilbereichen des Gesichts des Benutzers zu erzeugen. Die Datenverarbeitungseinrichtung weist eine Benutzerdatenbestimmungseinrichtung auf, welche ausgelegt ist, anhand der erzeugten Zentrierbilddaten Benutzerdaten zumindest eines Teilbereichs des Gesichts oder zumindest eines Teilbereichs eines Systems des Gesichts und einer daran in Gebrauchsstellung angeordneten Brille des Benutzers zu bestimmen, wobei die Benutzerdaten Ortsinformationen im dreidimensionalen Raum von vorbestimmten Punkten des Teilbereichs des Gesichts oder des Teilbereichs des Systems umfassen. Die Datenverarbeitungseinrichtung weist zudem eine Parameterbestimmungseinrichtung auf, welche ausgelegt ist, anhand der Benutzerdaten zumindest einen Teil der optischen Parameter des Benutzers zu bestimmen. Die Zentriervorrichtung weist eine Datenausgabeeinrichtung auf, welche zur Ausgabe zumindest eines Teils der bestimmten optischen Parameter des Benutzers ausgelegt ist. Einzelheiten der Anordnung der Bildaufnahmeeinrichtungen, der Benutzerdatenbestimmungseinrichtung, der Parameterbestimmungseinrichtung und der Datenausgabeeinrichtung können dem Dokument WO 2006/079540 A1 entnommen werden.

Mit anderen Worten weist die Zentriervorrichtung sämtliche Elemente für eine fachgerechte, individuelle Zentrierung einer Brille für den Benutzer auf. Dabei kann die Datenverarbeitungseinrichtung entweder ein- oder mehrteilig ausgebildet sein. Weiterhin kann die Datenausgabeeinrichtung gleichzeitig auch als die Abstandsausgabeeinrichtung ausgebildet sein. Alternativ können hierfür getrennte Ausgabeeinrichtungen vorgesehen sein. Bevorzugt wird die Abstandsmessung jedoch ohne zusätzliche Hardware durchgeführt, wobei die Datenverarbeitungseinrichtung einteilig ist und die Ausgabeeinrichtung sowohl als Abstandsausgabeeinrichtung als auch als Datenausgabeeinrichtung ausgebildet ist. Dadurch wird der Bauteilaufwand reduziert und es werden somit insgesamt die Baukosten reduziert.

Ein Aspekt betrifft ein Computerprogrammprodukt umfassend Programmteile, welche, wenn geladen in einem Computer, zur Durchführung des voranstehend beschriebenen Verfahrens ausgelegt sind.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

Begriffe wie oben, unten, oberhalb, unterhalb, usw. beziehen sich - sofern nicht anders spezifiziert - auf das Bezugssystem der Erde in einer Betriebsposition des Gegenstands der Erfindung.

Die Erfindung wird nachfolgend anhand von in Figuren gezeigten Ausführungsbeispielen näher beschrieben. Hierbei können gleiche oder ähnliche Bezugszeichen gleiche oder ähnliche Merkmale der Ausführungsformen kennzeichnen. Einzelne in den Figuren gezeigte Merkmale können in anderen Ausführungsbeispielen implementiert sein. Es zeigen:
- Fig. 1A: eine schematisch dargestellte Ansicht von oben auf einen Benutzer mit Elementen einer Zentriervorrichtung;
- Fig. 1B: eine schematisch dargestellte Seitenansicht auf den Benutzer mit Elementen der Zentriervorrichtung;
- Fig. 2A: eine schematische Darstellung eines von einer Bildaufnahmeeinrichtung erzeugten Bilddatensatzes, welcher Informationen über das Gesicht des Benutzers enthält; und
- Fig. 2B: eine schematische Darstellung des von der Bildaufnahmeeinrichtung erzeugten Bilddatensatzes mit markierten, charakteristischen Gesichtspunkten des Benutzers.

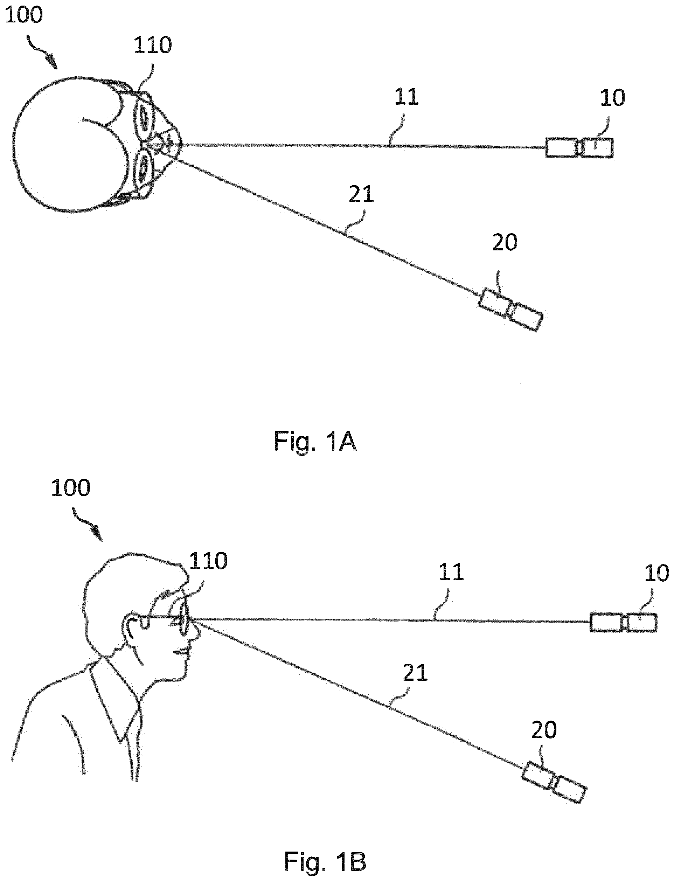

**Figuren 1A und 1B** zeigen in einer schematischen Darstellung einen Benutzer 100 im Messbereich einer Zentriervorrichtung, welche als eine Vorrichtung zum Bestimmen von 3D-Koordinaten vorbestimmter Punkte ausgebildet ist. Von der Zentriervorrichtung sind als Elemente lediglich eine erste Bildaufnahmevorrichtung 10 sowie eine zweite Bildaufnahmevorrichtung 20 gezeigt. Beide Bildaufnahmevorrichtungen 10 und 20 sind auf einen designierten Messbereich ausgerichtet. Der Messbereich ist in den Figuren 1A und 1B nicht eigens gekennzeichnet und kann einem Sollabstandsbereich entsprechen. Im Messbereich ist der Benutzer 100 angeordnet, genauer der Kopf des Benutzers 100 mit einer daran in Gebrauchsstellung angeordneten Brillenfassung 110.

Die Gebrauchsstellung ist in den eingangs aufgezeigten Normen definiert. Die Zentriervorrichtung ist dazu ausgebildet und vorgesehen, vorbestimmte Punkte des Systems bestehend aus dem Kopf des Benutzers 100 und der daran in Gebrauchsstellung angeordneten Brillenfassung 110 zu detektieren und deren 3D-Koordinaten zu berechnen. Dies dient zur Berechnung von optischen Parametern wie z.B. einer Pupillendistanz, einem Fassungsscheibenwinkel, einer Brillenglasvorneigung, einem Hornhautscheitelabstand von Brille und Auge sowie einer Einschleifhöhe der Brillengläser als optische Parameter.

Die Bildaufnahmevorrichtungen 10 und 20 können als digitale Kameras ausgebildet sein und weisen jeweils eine optische Achse 11 und 21 auf. Die erste optische Achse 11 ist vom Mittelpunkt einer Aufnahmelinse und/oder Blendenöffnung der ersten Bildaufnahmevorrichtung 10 auf den Messbereich gerichtet und definiert eine Aufnahmerichtung eines Bildes, das von der ersten Bildaufnahmevorrichtung 10 aufgenommen werden kann. Genauso ist die zweite optische Achse 21 vom Mittelpunkt einer Aufnahmelinse und/oder Blendenöffnung der zweiten Bildaufnahmevorrichtung 20 auf den Messbereich gerichtet und definiert eine Aufnahmerichtung eines Bildes, das von der Bildaufnahmevorrichtung 20 aufgenommen werden kann.

Die erste Bildaufnahmevorrichtung 10 und die zweite Bildaufnahmevorrichtung 20 sind in einer vorbekannten Relation zueinander angeordnet, d.h. sie weisen eine vorbekannte Kalibrierung auf. Dies kann bedeuten, dass die beiden Bildaufnahmevorrichtungen 10 und 20 einen bekannten Abstand im dreidimensionalen Raum zueinander aufweisen. Weiterhin können die Anordnungen und insbesondere die Verlaufsrichtungen der optischen Achsen 11 und 21 zueinander vorbekannt sein. Insbesondere kann ein Winkel zwischen der ersten optischen Achse 11 und der zweiten optischen Achse 21 vorbekannt sein für den Fall dass sich die optischen Achsen 11 und 21 schneiden.

In der in den Figuren 1A und 1B gezeigten Ausführungsform schneiden sich die optischen Achsen 11 und 21 zumindest in etwa zwischen den Augen des Benutzers auf dem Nasenrücken. In alternativen Ausführungsformen müssen sich die optischen Achsen 11 und 21 nicht zwangsweise in einem Punkt schneiden, sondern können im Messbereich und/oder Sollabstandsbereich lediglich einen geringsten zueinander Abstand zueinander aufweisen. Ein solcher geringster Abstand zueinander kann z.B. maximal 10 cm betragen. Hierbei kann als Teil der Kalibrierung der geringste Abstand der optischen Achsen 11 und 21 zueinander bekannt sein, ein ggf. vorhandener vertikaler Zwischenwinkel zwischen Projektionen der optischen Achsen 11 und 21 auf eine vertikale Ebene, und/oder ein ggf. vorhandener horizontaler Zwischenwinkel zwischen Projektionen der optischen Achsen 11 und 21 auf eine horizontale Ebene.

In dem in den Figuren 1A und 1B gezeigten Ausführungsbeispiel weisen die optischen Achsen 11 und 21 sowohl einen horizontalen Versatz zueinander auf und somit einen vertikalen Zwischenwinkel (vgl. Fig. 1B), als auch einen vertikalen Versatz zueinander und somit einen horizontalen Zwischenwinkel (vgl. Fig. 1A). Diese Anordnung mit sowohl einem horizontalen als auch einem vertikalen Versatz zwischen den beiden Bildaufnahmevorrichtungen 10 und 20 kann eine besonders günstige Bestimmung der zur Zentrierung relevanten optischen Parameter ermöglichen.

Aus den vorbekannten Anordnungen der Bildaufnahmevorrichtungen 10 und 20 sowie der zugehörigen optischen Achsen 11 und 21 kann mittels Triangulation eine Berechnung der 3D-Koordinaten vorbestimmter Punkte in von den Bildaufnahmevorrichtungen 10 und 20 aufgenommenen Zentrierbilddatensätzen erfolgen. Aus den 3D-Koordinaten der vorbestimmten Punkte kann eine Berechnung der zur Zentrierung notwendigen optischen Parameter erfolgen.

Dabei kann die Zentriervorrichtung unter statisch fixierter Anordnung der Bildaufnahmevorrichtungen 10 und 20 zueinander justiert, kalibriert und/oder fixiert sein. Zur Kalibrierung der Vorrichtung, also um die vorbekannte Relation der ersten Bildaufnahmevorrichtung 10 zur zweiten Bildaufnahmevorrichtung 20 aufzunehmen und/oder abzuspeichern, kann ein Kalibrierobjekt verwendet werden.

Mittels der Zentriervorrichtung werden allerdings nicht nur die optischen Parameter ermittelt, sondern in einem vorgelagerten Schritt zunächst der Abstand des Benutzers von der Zentriervorrichtung ermittelt, also z.B. der mittlere Abstand zu den beiden Bildaufnahmevorrichtungen 10 und 20. Dafür wird von jeder der beiden Bildaufnahmeeinrichtung 10 und 20 jeweils ein Bilddatensatz erzeugt, welcher zumindest einen Teilbereich des Gesichts des Benutzers enthält.

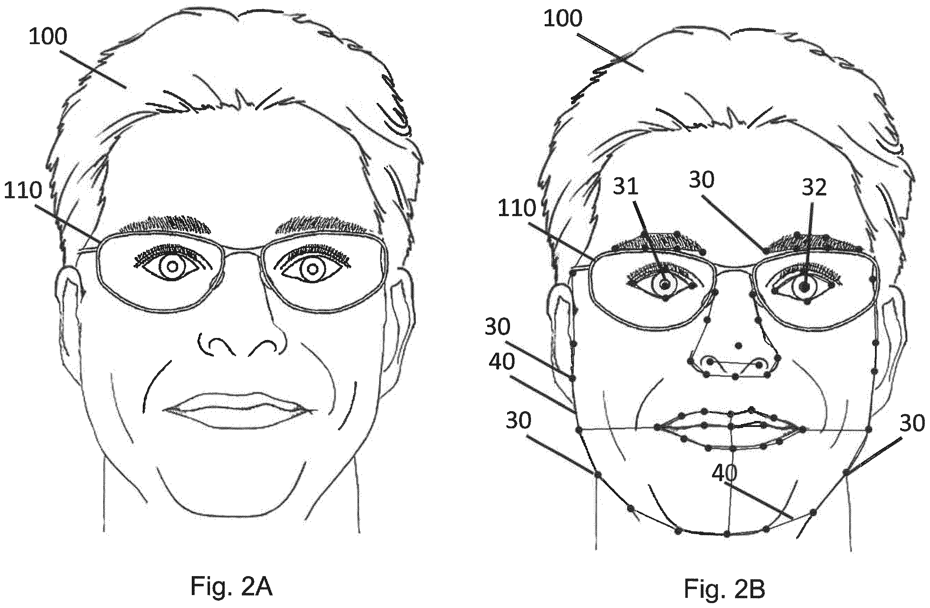

**Fig. 2A** zeigt in einer schematischen Darstellung einen solchen von der Bildaufnahmeeinrichtung 10 erzeugten digitalen Bilddatensatz, welcher Informationen über das Gesicht des Benutzers 100 enthält. Hierbei enthält der Bilddatensatz das gesamte Gesicht des Benutzers 100, an welchem in Gebrauchsstellung eine Brillenfassung 110 und/oder eine Brille angeordnet ist. Da die Brillenfassung 110 allerdings für die Abstandsmessung weniger relevant ist, kann die Abstandsmessung auch ohne Brillenfassung erfolgen, also lediglich Informationen über das Gesicht des Benutzers 100 ohne Brillenfassung 110 enthalten.

Zur Abstandsmessung wird jeder der beiden digitalen Bilddatensätze, welche von den beiden Bildaufnahmeeinrichtungen 10 und 20 zur selben Zeit aufgenommen wurden, auf einzelne, vorbestimmte, charakteristische Gesichtspunkte hin untersucht. Diese Untersuchung erfolgt automatisch oder halbautomatisch mittels trainierter Bildverarbeitungsalgorithmen, insbesondere mittels einer Gesichtserkennungssoftware.

**Fig. 2B** zeigt in einer schematischen Darstellung, welche einzelnen, charakteristischen Gesichtspunkte 30, 31, 32 von den Bildverarbeitungsalgorithmen in dem von der Bildaufnahmeeinrichtung 10 erzeugten (und in Fig. 1A gezeigten) Bilddatensatz ermittelt und markiert worden sind. Die Bildverarbeitungsalgorithmen sind darauf trainiert, vorbestimmte Gesichtspunkte 30, 31, 32 in den von den Bildaufnahmeeinrichtungen 10 und 20 erzeugten Bilddatensätzen zu erkennen.

Handelsübliche Bildverarbeitungsalgorithmen zur Gesichtserkennung können z.B. darauf trainiert sein, 68 unterschiedliche Gesichtspunkte als sogenannte Featurepunkte zu identifizieren und zu ermitteln. Der zur Abstandsmessung verwende Bildverarbeitungsalgorithmus kann z.B. genau diese standardmäßig verwendeten Gesichtspunkte benutzen und bei der Abstandsmessung ermitteln.

Alternativ kann der Bildverarbeitungsalgorithmus darauf trainiert sein, zusätzliche Gesichtspunkte zu ermitteln, und/oder es können einige der standardmäßig verwendeten Gesichtspunkte weggelassen werden. Es können auch vollständig andere, neu definierte Gesichtspunkte zur Abstandsmessung verwendet und ermittelt werden.

In einer Ausführungsform werden z.B. nur Gesichtspunkte um die Augenpartie herum zur Abstandsmessung verwendet, welche (in einer anderen Ausführungsform) um Gesichtspunkte der Nasenpartie ergänzt sein können. Bei diesen Ausführungsformen können Bilddatensätze zur Abstandsmessung ausreichen, welche nur Teilbereiche des Gesichts des Benutzers 100 enthalten, also z.B. nur die Augenpartie und/oder Nasenpartie des Benutzers 100.

In einer Ausführungsform wird eine andere Anzahl von Gesichtspunkten zur Abstandsmessung identifiziert und verwendet. Für eine hinreichende Balance zwischen benötigter Rechenleistung und erzielter Genauigkeit ist es vorteilhaft, zwischen etwa 40 und etwa 100 unterschiedliche, einzelne charakteristische Gesichtspunkte zur Abstandsmessung zu verwenden. Diese Anzahl kann allerdings variieren, insbesondere kann diese Anzahl bei steigender Übertragungskapazität und/oder Rechenleistung erhöht werden.

In dem in Fig. 2B gezeigten Bilddatensatz sind Gesichtspunkte 30, 31 und 32 ermittelt und mit einem schwarzen Kreis markiert, von denen lediglich einige exemplarisch mit einem Bezugszeichen gekennzeichnet sind. Einige benachbarte Gesichtspunkte sind nach einem durch den Bildverarbeitungsalgorithmus vorgegebenen Schema mit einer Verbindungslinie 40 verbunden.

In dem Bilddatensatz ist eine Gruppe Gesichtspunkte 30 um die Kinnpartie herum bis zu den beiden Ohren herum markiert und mit Verbindungslinien 40 miteinander verbunden. Weiterhin ist eine Gruppe Gesichtspunkte 30 um die Mundpartie, eine Gruppe um die Nasenpartie, jeweils eine Gruppe um die beiden Augen herum und jeweils eine Gruppe um die beiden Augenbrauen herum mit jeweils einer Mehrzahl an Gesichtspunkten 30 markiert, welche jeweils mit Verbindungslinien 40 miteinander verbunden sind, die nach vorgegebenen Algorithmusregeln geführt sind.

Allgemein kann der verwendete Bildverarbeitungsalgorithmus zumindest eine, mehrere, oder alle der folgenden Gruppen von charakteristischen Gesichtspunkte verwenden und in den Bilddatensätzen ermitteln:
- eine Kinngruppe Gesichtspunkte 30 um die Kinnpartie herum, ggf. bis zu den beiden Ohren des Benutzers 100, wobei die Kinngruppe die Kinnspitze als Gesichtspunkt 30 enthalten kann;
- eine Mundgruppe Gesichtspunkte 30 um die Mundpartie des Benutzers 100 herum, wobei die Mundgruppe den rechten und/oder linken Lippenwinkel als Gesichtspunkt 30 enthalten kann;
- eine Nasengruppe Gesichtspunkte 30 um die Nasenpartie des Benutzers 100 herum, wobei die Nasengruppe die Nasenspitze, einen rechten Nasenlochmittelpunkt und/oder einen linken Nasenlochmittelpunkt als Gesichtspunkt 30 enthalten kann;
- eine rechte Augengruppe Gesichtspunkte 30 um das rechte Augen des Benutzers 100 herum, wobei diese rechte Augengruppe den rechten Pupillenmittelpunkt 31 als Gesichtspunkt 30 enthalten kann;
- eine linke Augengruppe Gesichtspunkte 30 um das linke Augen des Benutzers 100 herum, wobei diese linke Augengruppe den linken Pupillenmittelpunkt 32 als Gesichtspunkt 30 enthalten kann;
- eine rechte Augenbrauengruppe Gesichtspunkte 30 um die rechte Augenbraue des Benutzers 100 herum, wobei die rechte Augenbrauengruppe eine rechte und/oder linke Augenbrauenspitze als Gesichtspunkt 30 enthalten kann; und/oder
- eine linke Augenbrauengruppe Gesichtspunkte 30 um die linke Augenbraue des Benutzers 100 herum, wobei die linke Augenbrauengruppe eine rechte und/oder linke Augenbrauenspitze als Gesichtspunkt 30 enthalten kann.

Insbesondere ist im gezeigten Ausführungsbeispiel ein rechter pupillennaher Gesichtspunkt 31 als auch ein linker pupillennaher Gesichtspunkt 32 ermittelt und identifiziert. Zur Abstandsmessung des Benutzers von der Zentriervorrichtung kann ein mittlerer Pupillenabstand verwendet werden, welcher sich als Mittelwert des Abstands des rechten pupillennahen Gesichtspunkts 31 und des linken pupillennahen Gesichtspunkts 32 ergibt. Alternativ kann aber auch ein mittlerer Augenbrauenabstand verwendet werden und/oder ein Nasenabstands als Abstand des Benutzers von der Zentriervorrichtung.

Die Auswertung der Bilddatensätze, also das Erkennen und Markieren der charakteristischen Gesichtspunkte, erfolgt an genau den zwei Bilddatensätzen, welche im Wesentlichen gleichzeitig durch die beiden unterschiedlich positionierten Bildaufnahmeeinrichtungen 10 und 20 erzeugt wurden. Diese beiden auszuwertenden Bilddatensätze unterscheiden sich voneinander, da sie aus unterschiedlichen Raumrichtungen aufgenommen wurden, also z.B. aus einer unterschiedlichen vertikalen Höhe und/oder aus einer unterschiedlichen (horizontalen) Himmelsrichtung.

Durch einen Vergleich der Pixellage einander entsprechender Gesichtspunkte 30 in diesen beiden ausgewerteten Bilddatensätzen, also z.B. durch einen Vergleich der beiden rechten pupillennahen Gesichtspunkte 31 und/oder der beiden linken pupillennahen Gesichtspunkte 32, kann unter Berücksichtigung der Kalibrierung der beiden Bildaufnahmeeinrichtungen 10 und 20 mittels Triangulation der Abstand des Benutzers 100 von der Zentriervorrichtung ermittelt werden.

Für die Abstandsmessung kann es ausreichend sein, den Abstand eines einzigen Gesichtspunkts 30 von der Zentriervorrichtung zu berechnen, also z.B. den Abstand des Gesichtspunkts 30 der Nasenspitze, des linken Mundwinkels oder des rechten Pupillenmittelpunkts 31, etc. Bevorzugt werden allerdings zur Fehlerkontrolle die Abstände zumindest zweier der Gesichtspunkte 30, 31, 32 von der Zentriervorrichtung berechnet und ein Mittelwert gebildet. Weichen diese Abstände sehr stark voneinander ab, kann die Messung an einem neuen Bild wiederholt werden und/oder der Mittelwert des Abstands aus einer größeren Anzahl von ermittelten Gesichtspunkten 30, 31, 32 gebildet werden, insbesondere von sämtlichen Gesichtspunkten 30, 31, 32.

Die Auswertung der Bilddatensätze kann an Live-Bildern erfolgen, also anhand eines Live-Feeds. Durch diese Live-Auswertung kann ein Leiten des Benutzers 100 in einen Sollabstandsbereich erfolgen, also z.B. in einen optimalen Fokusbereich der beiden Bildaufnahmeeinrichtungen 10 und 20.

Damit wird eine aktive, rein softwaregestützte Abstandsmessung ohne zusätzliche Hardware, also z.B. ohne ein Abstandsmessgerät (z.B. auf Basis von Ultraschall oder eines Laserinterferometers) ermöglicht. Dies ermöglicht eine verbesserte Positionierung des Benutzers 100 und reduziert Anwenderfehler beim Positionieren. Dies kann das Messergebnis der Zentrierung verbessern.

### Bezugszeichenliste

- 10: erste Bildaufnahmeeinrichtung
- 11: erste optische Achse
- 20: zweite Bildaufnahmeeinrichtung
- 21: zweite optische Achse
- 30: Gesichtspunkt
- 31: rechter pupillennaher Gesichtspunkt
- 32: linker pupillennaher Gesichtspunkt
- 40: Verbindungslinie
- 100: Benutzer
- 110: Brillenfassung

## Patentansprüche

1. Verfahren zur Abstandsmessung eines Benutzers (100) von einer Zentriervorrichtung, welche zum Bestimmen von optischen Parametern des Benutzers (100) ausgelegt ist, wobei:
- der Abstand zu der Zentriervorrichtung ermittelt wird, welche zwei Bildaufnahmeeinrichtungen (10, 20) mit einer vorbekannten Kalibrierung zueinander aufweist;
- der Benutzer (100) vor der Zentriervorrichtung derart positioniert wird, dass die zwei Bildaufnahmeeinrichtungen (10, 20) zumindest teilweise auf das Gesicht des der Zentriervorrichtung zugewandten Benutzers (100) gerichtet sind;
- mittels der zwei Bildaufnahmeeinrichtungen (10, 20) zwei Bilddatensätze von jeweils zumindest Teilbereichen des Gesichts des Benutzers (100) aus zwei unterschiedlichen Raumrichtungen erzeugt werden;
- in jedem der beiden Bilddatensätze mittels Bildverarbeitungsalgorithmen jeweils eine Mehrzahl von vorbestimmten charakteristischen Gesichtspunkten (30, 31, 32) des Benutzers (100) ermittelt werden, wobei die charakteristischen Gesichtspunkte (30, 31, 32) als Featurepunkte einer Gesichtserkennungssoftware verwendet werden, welche in den beiden Bilddatensätzen mittels der Gesichtserkennungssoftware ermittelt werden; und
- durch einen Vergleich der Position sich entsprechender charakteristischer Gesichtspunkte (30, 31, 32) in den beiden Bilddatensätzen unter Berücksichtigung der Kalibrierung der beiden Bildaufnahmeeinrichtungen (10, 20) zueinander der Abstand des Benutzers (100) von der Zentriervorrichtung ermittelt wird.

2. Verfahren nach Anspruch 1, wobei in den beiden Bilddatensätzen jeweils von etwa 20 bis etwa 100 verschiedene charakteristische Gesichtspunkte (30, 31, 32) ermittelt werden.

3. Verfahren nach Anspruch 1 oder 2, wobei in Abhängigkeit des ermittelten Abstands zumindest solange eine Rückmeldung erzeugt wird, bis der Benutzer (100) in einem Sollabstandsbereich vor der Zentriervorrichtung positioniert ist

4. Verfahren nach einem der vorangegangenen Ansprüche, wobei
- die charakteristischen Gesichtspunkte (30, 31, 32) sowohl einen rechten als auch einen linken pupillennahen Gesichtspunkt (31, 32) enthalten und
- unter Berücksichtigung der ermittelten rechten und linken pupillennahen Gesichtspunkte (31, 32) ein mittlerer Abstand zwischen Zentriervorrichtung und Pupillen des Benutzers als der Abstand des Benutzers (100) von der Zentriervorrichtung ermittelt wird.

5. Verfahren nach einem der vorangegangenen Ansprüche, wobei mit den Bildaufnahmeeinrichtungen (10, 20) digitale Videos als die beiden Bilddatensätze aufgenommen werden.

6. Verfahren nach Anspruch 5, wobei die beiden Bilddatensätze als ein Live-Feed erzeugt werden, in denen die charakteristischen Gesichtspunkte (30, 31, 32) des Benutzers (100) in Echtzeit ermittelt werden.

7. Verfahren nach einem der vorangegangenen Ansprüche, wobei die Zentriervorrichtung nach der Abstandsmessung mit den zwei Bildaufnahmeeinrichtungen (10, 20) Zentrierbilddaten von jeweils zumindest einem Teilbereich des Gesichts des Benutzers (100) erzeugt und anhand dieser Zentrierbilddaten optische Parameter des Benutzers (100) ermittelt.

8. Verfahren nach Anspruch 7, wobei die Bilddatensätze zur Bestimmung des Abstands des Benutzers (100) in einer geringeren Auflösung erzeugt werden als die Zentrierbilddaten zur Bestimmung der optischen Parameter.

9. Verfahren nach einem der vorangegangenen Ansprüche, wobei die Kalibrierung sowohl eine interne als auch eine externe Kalibrierung umfasst.

10. Zentriervorrichtung zum Bestimmen von optischen Parametern eines Benutzers (100) und zur Abstandsmessung des Benutzers (100) von der Zentriervorrichtung mit:
- zwei Bildaufnahmeeinrichtungen (10, 20) mit einer vorbekannten Kalibrierung zueinander, welche ausgelegt und angeordnet sind, jeweils Bilddatensätze von zumindest Teilbereichen des Gesichts des Benutzers (100) aus zwei unterschiedlichen Raumrichtungen zu erzeugen;
- einer Datenverarbeitungseinrichtung mit
-- einer Punkterkennungseinrichtung, welche ausgelegt ist, in jedem der erzeugten Bilddatensätze mittels Bildverarbeitungsalgorithmen jeweils eine Mehrzahl von vorbestimmten charakteristischen Gesichtspunkten (30, 31, 32) des Benutzers (100) zu ermitteln, wobei die charakteristischen Gesichtspunkte (30, 31, 32) als Featurepunkte einer Gesichtserkennungssoftware verwendet werden, welche in den beiden Bilddatensätzen mittels der Gesichtserkennungssoftware ermittelt werden;
-- einer Abstandsermittlungseinrichtung, welche ausgelegt ist, durch einen Vergleich der Position sich entsprechender charakteristischer Gesichtspunkte (30, 31, 32) in den beiden Bilddatensätzen unter Berücksichtigung der Kalibrierung der beiden Bildaufnahmeeinrichtungen (10, 20) zueinander einen Abstand des Benutzers (100) von der Zentriervorrichtung zu ermitteln.

11. Zentriervorrichtung nach Anspruch 10, mit einer Abstandsausgabeeinrichtung, welche ausgelegt ist, in Abhängigkeit des von der Abstandsermittlungseinrichtung ermittelten Abstands zumindest solange eine Rückmeldung zu erzeugen, bis der Benutzer (100) in einem Sollabstandsbereich vor der Zentriervorrichtung positioniert ist.

12. Zentriervorrichtung nach Anspruch 10 oder 11, wobei
- die zwei Bildaufnahmeeinrichtungen (10, 20) zudem ausgelegt und angeordnet sind, jeweils Zentrierbilddaten zumindest von Teilbereichen des Gesichts (100) des Benutzers zu erzeugen;
- die Datenverarbeitungseinrichtung eine Benutzerdatenbestimmungseinrichtung aufweist, welche ausgelegt ist, anhand der erzeugten Zentrierbilddaten Benutzerdaten zumindest eines Teilbereichs des Gesichts oder zumindest eines Teilbereichs eines Systems des Gesichts und einer daran in Gebrauchsstellung angeordneten Brille des Benutzers (100) zu bestimmen, wobei die Benutzerdaten Ortsinformationen im dreidimensionalen Raum von vorbestimmten Punkten des Teilbereichs des Gesichts oder des Teilbereichs des Systems umfassen;
- die Datenverarbeitungseinrichtung zudem eine Parameterbestimmungseinrichtung aufweist, welche ausgelegt ist, anhand der Benutzerdaten zumindest einen Teil der optischen Parameter des Benutzers (100) zu bestimmen; und
- die Zentriervorrichtung eine Datenausgabeeinrichtung aufweist, welche zur Ausgabe zumindest eines Teils der bestimmten optischen Parameter des Benutzers (100) ausgelegt ist.

13. Computerprogrammprodukt umfassend Programmteile, welche, wenn geladen in einem Computer, zur Durchführung eines Verfahrens nach einem der Ansprüche 1 bis 9 ausgelegt ist.

## Claims

1. Method for measuring the distance of a user (100) from a centring device which is designed to determine optical parameters of the user (100), wherein
- the distance to the centring device is determined, which has two image recording devices (10, 20) with a previously known calibration relative to one another;
- the user (100) is positioned in front of the centring device in such a way that the two image recording devices (10, 20) are at least partially directed towards the face of the user (100) facing the centring device;
- two image data sets of at least partial areas of the face of the user (100) are generated from two different spatial directions by means of the two image recording devices (10, 20);
- in each of the two image data sets, a plurality of predetermined characteristic facial points (30, 31, 32) of the user (100) are determined by means of image processing algorithms, wherein the characteristic facial points (30, 31, 32) are used as feature points of a facial recognition software, which are determined in the two image data sets by means of the facial recognition software; and
- by comparing the position of corresponding characteristic facial points (30, 31, 32) in the two image data sets, taking into account the calibration of the two image recording devices (10, 20) with respect to each other, the distance of the user (100) from the centring device (10, 20) is determined.

2. Method according to claim 1, wherein in each of the two image data sets from about 20 to about 100 different characteristic viewpoints (30, 31, 32) are determined.

3. Method according to claim 1 or 2, wherein feedback is generated as a function of the determined distance at least until the user (100) is positioned in a desired distance range in front of the centring device

4. Method according to one of the preceding claims, wherein
- the characteristic viewpoints (30, 31, 32) contain both a right and a left viewpoint (31, 32) close to the pupil, and
- a mean distance between the centring device and the pupils of the user is determined as the distance of the user (100) from the centring device, taking into account the determined right and left viewpoints (31, 32) close to the pupil.

5. Method according to any of the preceding claims, wherein digital videos are recorded with the image recording devices (10, 20) as the two sets of image data.

6. Method according to claim 5, wherein the two image data sets are generated as a live feed in which the characteristic viewpoints (30, 31, 32) of the user (100) are determined in real time.

7. Method according to one of the preceding claims, wherein the centring device generates centring image data of at least one partial area of the face of the user (100) in each case after the distance measurement with the two image recording devices (10, 20) and determines optical parameters of the user (100) on the basis of this centring image data.

8. Method according to claim 7, wherein the image data sets for determining the distance of the user (100) are generated at a lower resolution than the centring image data for determining the optical parameters.

9. Method according to any of the preceding claims, wherein the calibration comprises both an internal and an external calibration.

10. Centring device for determining optical parameters of a user (100) and for measuring the distance of the user (100) from the centring device, comprising:
- two image recording devices (10, 20) with a previously known calibration to each other, which are designed and arranged to generate image data sets of at least partial areas of the face of the user (100) from two different spatial directions;
- a data processing device with
- a point recognition device which is designed to determine a plurality of predetermined characteristic facial points (30, 31, 32) of the user (100) in each of the generated image data sets by means of image processing algorithms, wherein the characteristic facial points (30, 31, 32) are used as feature points of a facial recognition software which are determined in the two image data sets by means of the facial recognition software;
- a distance determination device which is designed to determine a distance of the user (100) from the centring device by comparing the position of corresponding characteristic facial points (30, 31, 32) in the two image data sets, taking into account the calibration of the two image recording devices (10, 20) with respect to each other.

11. Centring device according to claim 10, having a distance output device which is designed to generate a feedback signal as a function of the distance determined by the distance determination device at least until the user (100) is positioned in a target distance range in front of the centring device.

12. Centring device according to claim 10 or 11, wherein
- the two image recording devices (10, 20) are also designed and arranged to each generate centring image data of at least partial areas of the user's face (100);
- the data processing means comprises user data determining means adapted to determine, from the generated centring image data, user data of at least a portion of the face or at least a portion of a system of the face and spectacles of the user (100) disposed thereon in a position of use, the user data comprising location information in three-dimensional space of predetermined points of the portion of the face or the portion of the system;
- the data processing means further comprises parameter determining means adapted to determine at least a portion of the optical parameters of the user (100) from the user data; and
- the centring device comprises data output means adapted to output at least a portion of the determined optical parameters of the user (100).

13. Computer program product comprising program parts which, when loaded in a computer, are adapted to perform a method according to any one of claims 1 to 9.

## Revendications

1. Procédé de mesure de la distance entre un utilisateur (100) et un dispositif de centrage conçu pour déterminer des paramètres optiques de l'utilisateur (100), dans lequel :
- la distance par rapport au dispositif de centrage est déterminée, lequel présente deux dispositifs de prise de vue (10, 20) avec un étalonnage connu au préalable l'un par rapport à l'autre ;
- l'utilisateur (100) est positionné devant le dispositif de centrage de telle sorte que les deux dispositifs de prise de vue (10, 20) sont dirigés au moins partiellement sur le visage de l'utilisateur (100) tourné vers le dispositif de centrage ;
- au moyen des deux dispositifs de prise de vue (10, 20), deux jeux de données d'image de respectivement au moins des zones partielles du visage de l'utilisateur (100) sont générés à partir de deux directions spatiales différentes ;
- dans chacun des deux ensembles de données d'image, une pluralité de points caractéristiques prédéterminés (30, 31, 32) de l'utilisateur (100) sont déterminés au moyen d'algorithmes de traitement d'image, les points caractéristiques (30, 31, 32) étant utilisés comme points caractéristiques d'un logiciel de reconnaissance de visage, lesquels sont déterminés dans les deux ensembles de données d'image au moyen du logiciel de reconnaissance de visage ; et
- la distance de l'utilisateur (100) par rapport au dispositif de centrage est déterminée par une comparaison de la position de points de vue caractéristiques correspondants (30, 31, 32) dans les deux jeux de données d'image en tenant compte du calibrage des deux dispositifs de prise de vue (10, 20) l'un par rapport à l'autre.

2. Procédé selon la revendication 1, dans lequel on détermine dans les deux jeux de données d'image respectivement d'environ 20 à environ 100 points de vue caractéristiques différents (30, 31, 32).

3. Procédé selon la revendication 1 ou 2, dans lequel, en fonction de la distance déterminée, une rétroaction est générée au moins jusqu'à ce que l'utilisateur (100) soit positionné dans une zone de distance de consigne devant le dispositif de centrage.

4. Procédé selon l'une des revendications précédentes, dans lequel
- les points de vue caractéristiques (30, 31, 32) contiennent aussi bien un point de vue droit qu'un point de vue gauche proche de la pupille (31, 32) et
- une distance moyenne entre le dispositif de centrage et les pupilles de l'utilisateur est déterminée comme étant la distance de l'utilisateur (100) par rapport au dispositif de centrage, en tenant compte des points de vue droit et gauche déterminés (31, 32) proches de la pupille.

5. Procédé selon l'une quelconque des revendications précédentes, dans lequel des vidéos numériques sont enregistrées comme les deux ensembles de données d'image à l'aide des dispositifs d'acquisition d'image (10, 20).

6. Procédé selon la revendication 5, dans lequel les deux ensembles de données d'image sont générés sous la forme d'un flux en direct dans lequel les points de vue caractéristiques (30, 31, 32) de l'utilisateur (100) sont déterminés en temps réel.

7. Procédé selon l'une des revendications précédentes, dans lequel le dispositif de centrage génère, après la mesure de la distance avec les deux dispositifs de prise de vue (10, 20), des données d'image de centrage de respectivement au moins une zone partielle du visage de l'utilisateur (100) et détermine des paramètres optiques de l'utilisateur (100) à l'aide de ces données d'image de centrage.

8. Procédé selon la revendication 7, dans lequel les jeux de données d'image pour déterminer la distance de l'utilisateur (100) sont générés avec une résolution plus faible que les données d'image de centrage pour déterminer les paramètres optiques.

9. Procédé selon l'une quelconque des revendications précédentes, dans lequel l'étalonnage comprend à la fois un étalonnage interne et un étalonnage externe.

10. Dispositif de centrage pour déterminer des paramètres optiques d'un utilisateur (100) et pour mesurer la distance de l'utilisateur (100) par rapport au dispositif de centrage, comprenant :
- deux dispositifs de prise de vue (10, 20) avec un calibrage connu l'un par rapport à l'autre, qui sont conçus et disposés pour générer respectivement des jeux de données d'image d'au moins des zones partielles du visage de l'utilisateur (100) à partir de deux directions spatiales différentes ;
- un dispositif de traitement de données avec
- un dispositif de reconnaissance de points qui est conçu pour déterminer dans chacun des ensembles de données d'image générés, au moyen d'algorithmes de traitement d'image, respectivement une pluralité de points de vue caractéristiques prédéterminés (30, 31, 32) de l'utilisateur (100), les points de vue caractéristiques (30, 31, 32) étant utilisés comme points caractéristiques d'un logiciel de reconnaissance de visages, lesquels sont déterminés dans les deux ensembles de données d'image au moyen du logiciel de reconnaissance de visages;
- un dispositif de détermination de distance, qui est conçu pour déterminer une distance de l'utilisateur (100) par rapport au dispositif de centrage par une comparaison de la position de points de vue caractéristiques (30, 31, 32) se correspondant dans les deux ensembles de données d'image en tenant compte du calibrage des deux dispositifs de prise de vue (10, 20) l'un par rapport à l'autre.

11. Dispositif de centrage selon la revendication 10, avec un dispositif de sortie de distance qui est conçu pour générer une rétroaction en fonction de la distance déterminée par le dispositif de détermination de distance au moins jusqu'à ce que l'utilisateur (100) soit positionné dans une zone de distance de consigne devant le dispositif de centrage.

12. Dispositif de centrage selon la revendication 10 ou 11, dans lequel
- les deux dispositifs de prise de vue (10, 20) sont en outre conçus et disposés pour générer chacun des données d'image de centrage d'au moins des zones partielles du visage (100) de l'utilisateur ;
- le dispositif de traitement de données présente un dispositif de détermination de données d'utilisateur qui est conçu pour déterminer, à l'aide des données d'image de centrage générées, des données d'utilisateur d'au moins une zone partielle du visage ou d'au moins une zone partielle d'un système du visage et de lunettes de l'utilisateur (100) disposées sur celui-ci en position d'utilisation, les données d'utilisateur comprenant des informations de localisation dans l'espace tridimensionnel de points prédéterminés de la zone partielle du visage ou de la zone partielle du système ;
- le dispositif de traitement de données comprend en outre un dispositif de détermination de paramètres qui est conçu pour déterminer, à l'aide des données d'utilisateur, au moins une partie des paramètres optiques de l'utilisateur (100) ; et
- le dispositif de centrage comprend un dispositif de sortie de données qui est conçu pour sortir au moins une partie des paramètres optiques déterminés de l'utilisateur (100).

13. Produit de programme d'ordinateur comprenant des parties de programme qui, lorsqu'elles sont chargées dans un ordinateur, sont conçues pour mettre en oeuvre un procédé selon l'une quelconque des revendications 1 à 9.
